# EUROPÄISCHE PATENTSCHRIFT

(11) **EP 3 776 786 B1**
(45) Veröffentlichungstag und Bekanntmachung des Hinweises auf die Patenterteilung: **15.12.2021**
(21) Anmeldenummer: 18727238.0
(22) Anmeldetag: 18.05.2018
(51) Int. Cl.: H02J 3/36

(54) **ÜBERWACHEN EINER HOCHSPANNUNGS-GLEICHSTROM-ÜBERTRAGUNG**
MONITORING OF A HIGH-VOLTAGE DC TRANSMISSION
SURVEILLANCE D'UNE TRANSMISSION D'UN COURANT CONTINU À HAUTE TENSION

(43) Veröffentlichungstag der Anmeldung: 17.02.2021
(73) Patentinhaber: Siemens Energy Global GmbH & Co. KG, 81739 München (DE)
(72) Erfinder: KARACAY, Mustafa Baris, 91058 Erlangen (DE); LORENZ, Andreas, 91054 Erlangen (DE); STARSCHICH, Ewgenij, 91452 Wilhermsdorf (DE)
(86) Internationale Anmeldenummer: PCT/EP2018/063212
(87) Internationale Veröffentlichungsnummer: WO 2019/219217

(56) Entgegenhaltungen:
- WO-A1-99/63641
- WO-A1-2014/132396
- WO-A1-2016/156416
- GB-A- 2 537 851
- US-B2- 8 830 708

## Beschreibung

Die Erfindung betrifft ein Verfahren zum Überwachen einer Hochspannungs-Gleichstrom-Übertragung zwischen zwei Stromrichterstationen und eine zur Durchführung des Verfahrens ausgebildete Stromrichterstation für eine Hochspannungs-Gleichstrom-Übertragung.

Elektrische Energie zwischen Wechselstromnetzen wird über große Entfernungen häufig mit hoher Gleichspannung übertragen, da die Energieübertragung mit Gleichspannung über große Entfernungen gegenüber einer Energieübertragung mit Wechselspannung verlustärmer und kostengünstiger ist. Diese Art der Energieübertragung wird als Hochspannungs-Gleichstrom-Übertragung (HGÜ) über eine Hochspannungs-Gleichstrom-Übertragungsstrecke (HGÜ-Strecke) bezeichnet.

Um eine HGÜ-Strecke mit einem Wechselstromnetz zu verbinden, ist zwischen dem Wechselstromnetz und einem Ende der HGÜ-Strecke eine Stromrichterstation angeordnet, in der die Umwandlung zwischen Wechselstrom und Wechselspannung des Wechselstromnetzes und Gleichstrom und Gleichspannung der HGÜ erfolgt. Die Energieübertragung zwischen dem Wechselstromnetz und der HGÜ-Strecke kann dabei monopolar, symmetrisch monopolar oder bipolar erfolgen. Bei einer symmetrisch monopolaren und bei einer bipolaren Energieübertragung werden zwei Pole verwendet, wobei an einem Pol eine gegenüber einem Erdpotential positive Hochspannung liegt und an dem anderen Pol eine gegenüber dem Erdpotential negative Hochspannung liegt. Bei einer symmetrisch monopolaren Energieübertragung werden beide Pole durch dieselbe Stromrichterstation mit dem Wechselstromnetz verbunden, bei einer bipolaren Energieübertragung werden die beiden Pole durch verschiedene Stromrichterstationen mit dem Wechselstromnetz verbunden.

Eine HGÜ kann durch Gleichstromfehler beeinträchtigt werden. Beispielsweise kann ein Erdschlussfehler auftreten, bei dem ein Pol der HGÜ mit einem Erdpotential verbunden wird. Außerdem kann bei einer symmetrisch monopolaren HGÜ ein Pol-zu-Pol-Fehler auftreten, bei dem die beiden Pole kurzgeschlossen werden. In beiden Fällen werden die Stromrichterstationen der HGÜ blockiert und von dem jeweiligen Wechselstromnetz getrennt, wenn die Stromrichterstationen in herkömmlicher Halbbrückentechnologie ausgeführt sind. Um eine Belastung der Stromrichterstationen und anderer HGÜ-Komponenten, insbesondere der Übertragungsleitungen, in solchen Fehlerfällen zu reduzieren, ist eine schnelle Erkennung derartiger Gleichstromfehler erforderlich, um Schäden durch die Gleichstromfehler vermeiden oder begrenzen zu können.

Aus der Patentschrift US 8 830 708 B2 ist ein Verfahren bekannt, bei dem ein Fehler auf der Gleichstromseite einer HGÜ erkannt wird, wenn der Strom oder die Stromstärkenänderung einen bestimmten Schwellenwert überschreitet.

Der Erfindung liegt die Aufgabe zugrunde, ein Verfahren zum Überwachen einer HGÜ und eine Stromrichterstation für eine HGÜ anzugeben, die insbesondere hinsichtlich der Erkennung von Gleichstromfehlern verbessert sind.

Die Aufgabe wird erfindungsgemäß durch ein Verfahren mit den Merkmalen des Anspruchs 1 und eine Stromrichterstation mit den Merkmalen des Anspruchs 8 gelöst.

Vorteilhafte Ausgestaltungen der Erfindung sind Gegenstand der Unteransprüche.

Bei dem erfindungsgemäßen Verfahren zum Überwachen einer HGÜ zwischen zwei Stromrichterstationen werden ein Stromstärkeschwellenwert für eine Stromstärke der HGÜ, wenigstens eine Intervalllänge für Zeitintervalle und für jede vorgegebene Intervalllänge ein Änderungsschwellenwert für eine über Zeitintervalle der Intervalllänge gemittelte Stromstärkenänderung der Stromstärke der HGÜ vorgegeben. Für jeden Pol der HGÜ werden die Stromstärke und für jede vorgegebene Intervalllänge eine über Zeitintervalle der Intervalllänge gemittelte Stromstärkenänderung der Stromstärke ermittelt. Für jeden Pol der HGÜ werden der Betrag der Stromstärke mit dem vorgegebenen Stromstärkeschwellenwert und für jede vorgegebene Intervalllänge der Betrag der gemittelten Stromstärkenänderung mit dem für die Intervalllänge vorgegebenen Änderungsschwellenwert verglichen. Es wird auf einen Gleichstromfehler geschlossen, wenn der Betrag der Stromstärke wenigstens eines Pols größer als der Stromstärkeschwellenwert ist oder für eine Intervalllänge der Betrag der gemittelten Stromstärkenänderung der Stromstärke wenigstens eines Pols größer als der für die Intervalllänge vorgegebene Änderungsschwellenwert ist.

Unter der Stromstärke eines Pols wird dabei eine Stromstärke eines elektrischen Gleichstroms verstanden, der in einer diesem Pol zugehörigen Übertragungsleitung der HGÜ fließt. Entsprechend wird im Folgenden unter dem Strom eines Pols ein Gleichstrom verstanden, der in einer diesem Pol zugehörigen Übertragungsleitung der HGÜ fließt.

Die erfindungsgemäße Erfassung und Auswertung der Stromstärke und der Stromstärkenänderung jedes Pols der HGÜ ermöglicht vorteilhaft eine sehr schnelle Erkennung eines Gleichstromfehlers wie eines Erdschlussfehlers oder eines Pol-zu-Pol-Fehlers. Dadurch kann auf einen Gleichstromfehler sehr schnell reagiert werden, um Schäden durch den Gleichstromfehler zu vermeiden oder zu reduzieren und eine Unterbrechungsdauer der HGÜ durch den Gleichstromfehler zu reduzieren. Insbesondere kann eine Blindleistung zur Netzstabilisierung unterbrechungsfrei zur Verfügung gestellt werden und eine durch einen Gleichstromfehler verursachte Spannungsbelastung für Komponenten, die für die HGÜ verwendet werden, insbesondere für Übertragungsleitungen der HGÜ, wird reduziert, wodurch die Lebensdauer der Komponenten verlängert wird. Die Erfindung ermöglicht beispielsweise, eine Wirkleistungsübertragung bei einem temporären Gleichstromfehler nach einer Unterbrechungsdauer von weniger als 800 ms wieder aufzunehmen. Durch die Reduzierung der Spannungsbelastung kann ferner auch eine Isolierungsbemessung für die elektrische Isolierung der Übertragungsleitungen der HGÜ reduziert werden.

Eine Ausgestaltung der Erfindung sieht vor, dass im Fall eines erkannten Gleichstromfehlers der Strom jedes Pols durch eine Ansteuerung eines dem Pol zugeordneten Stromrichters einer Stromrichterstation auf Null geregelt wird. Mit anderen Worten wird bei einem erkannten Gleichstromfehler für jeden Pol der HGÜ die Regelung eines dem Pol zugeordneten Stromrichters einer Stromrichterstation auf eine Stromregelung umgestellt, die den Strom des Pols auf Null regelt. Dadurch wird vorteilhaft eine schnelle Reduktion von Fehlerströmen im Fall von Gleichstromfehlern ermöglicht.

Eine weitere Ausgestaltung der Erfindung sieht vor, dass im Fall einer symmetrisch monopolaren HGÜ nach der Regelung der Ströme der Pole auf Null ein durch den Gleichstromfehler aufgeladener Pol entladen wird. Diese Ausgestaltung der Erfindung berücksichtigt, dass sich bei einer symmetrisch monopolaren HGÜ im Fall eines Erdschlussfehlers eines Pols der andere Pol auflädt, das heißt dass der Betrag der an diesem Pol anliegenden Hochspannung ansteigt, z. B. bis auf den Wert der Spannungsdifferenz zwischen den beiden Polen in dem fehlerfreien Betrieb. Die Erfindung ermöglicht also insbesondere das Erkennen und Behandeln eines unsymmetrischen Erdschlussfehlers einer symmetrisch monopolaren HGÜ. Beispielsweise wird eine Regelungszeitdauer für die Regelung der Ströme der Pole auf Null vorgegeben und der durch den Gleichstromfehler aufgeladene Pol wird nach dem Ablauf der Regelungszeitdauer entladen. Die Regelungszeitdauer liegt beispielsweise zwischen 100 ms und 500 ms. Die erfindungsgemäße Entladung des aufgeladenen Pols nach der Regelung der Ströme der Pole auf Null reduziert vorteilhaft die Spannungsbelastung der mit dem aufgeladenen Pol verbundenen Komponenten der HGÜ.

Eine weitere Ausgestaltung der Erfindung sieht vor, dass zwei verschiedene Intervalllängen für Zeitintervalle vorgegeben werden. Beispielsweise liegt eine erste Intervalllänge zwischen 100 µs und 500 µs und die zweite Intervalllänge liegt zwischen 500 µs und 2 ms. Diese Ausgestaltung der Erfindung sieht also vor, dass die Stromstärkenänderung für jeden Pol separat über Zeitintervalle zweier verschiedener Intervalllängen gemittelt und ausgewertet wird. Dadurch wird berücksichtigt, dass Gleichstromfehler Stromstärkenänderungen auf verschiedenen Zeitskalen verursachen können. Die Auswertung einer über Zeitintervalle zwischen 100 µs und 500 µs gemittelten Stromstärkenänderung ermöglicht die Erkennung von schnellen Änderungen der Stromstärke, die typisch bei Gleichstromfehlern einer HGÜ auftreten. Die Auswertung einer über Zeitintervalle zwischen 500 µs und 2 ms gemittelten Stromstärkenänderung ermöglicht die Erkennung von langsameren Änderungen der Stromstärke, die typisch bei Gleichstromfehlern einer HGÜ, insbesondere bei Änderungen mit einem Vorzeichenwechsel der Stromstärke, auftreten.

Eine erfindungsgemäße Stromrichterstation für eine HGÜ umfasst eine Messvorrichtung, die für jeden Pol der HGÜ zum wiederholten Erfassen einer Stromstärke und einer Stromstärkenänderung der Stromstärke ausgebildet ist, und eine Steuereinheit, die dazu ausgebildet ist, für jeden Pol den Betrag der Stromstärke mit einem vorgegebenen Stromstärkeschwellenwert zu vergleichen und für wenigstens eine vorgegebene Intervalllänge aus der Stromstärkenänderung der Stromstärke des Pols eine über Zeitintervalle der Intervalllänge gemittelte Stromstärkenänderung zu bilden und deren Betrag mit einem für die Intervalllänge vorgegebenen Änderungsschwellenwert zu vergleichen sowie auf einen Gleichstromfehler zu schließen, wenn der Betrag der Stromstärke wenigstens eines Pols größer als der Stromstärkeschwellenwert ist oder für eine Intervalllänge der Betrag der gemittelten Stromstärkenänderung der Stromstärke wenigstens eines Pols größer als der für die Intervalllänge vorgegebene Änderungsschwellenwert ist.

Eine Ausgestaltung einer erfindungsgemäßen Stromrichterstation sieht vor, dass jeder Stromrichter der Stromrichterstation zum Aufbauen einer Gegenspannung ausgebildet ist, die einer Aufladung eines Pols, dem der Stromrichter zugeordnet ist, entgegenwirkt. Beispielsweise ist der Stromrichter dazu als ein Vollbrücken-Stromrichter ausgebildet oder weist eine ausreichende Anzahl von als Vollbrücken ausgebildeten Stromrichtermodulen auf. In diesem Fall ist die Steuereinheit insbesondere dazu ausgebildet, im Fall eines erkannten Gleichstromfehlers den Strom jedes Pols durch eine Ansteuerung eines dem Pol zugordneten Stromrichters der Stromrichterstation auf Null zu regeln.

Eine weitere Ausgestaltung einer erfindungsgemäßen Stromrichterstation sieht vor, dass im Fall einer symmetrisch monopolaren HGÜ die Steuereinheit dazu ausgebildet ist, nach der Regelung der Ströme der Pole auf Null eine Entladung eines durch den Gleichstromfehler aufgeladenen Pols zu veranlassen. Dabei kann vorgesehen sein, dass die Steuereinheit dazu ausgebildet ist, die Ströme der Pole während einer vorgegebenen Regelungszeitdauer auf Null zu regeln und die Entladung des durch den Gleichstromfehler aufgeladenen Pols nach dem Ablauf der Regelungszeitdauer zu veranlassen.

Jeder Stromrichter der Stromrichterstation ist ferner beispielsweise als ein selbstgeführter Stromrichter (VSC = Voltage Source Converter) und/oder als ein modularer Multilevel-Stromrichter ausgebildet.

Eine erfindungsgemäße Stromrichterstation ermöglicht die Durchführung des erfindungsgemäßen Verfahrens. Die Vorteile einer erfindungsgemäßen Stromrichterstation entsprechen daher den oben genannten Vorteilen des erfindungsgemäßen Verfahrens und werden hier nicht noch einmal gesondert aufgeführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch zwei Stromrichterstationen und eine HGÜ-Strecke einer HGÜ zwischen zwei Wechselstromnetzen,
FIG 2 ein Ablaufdiagramm eines Verfahrens zum Überwachen einer HGÜ,
FIG 3 ein Blockdiagramm für die Auswertung einer Stromstärke und einer Stromstärkenänderung eines Pols einer HGÜ,
FIG 4 Verläufe einer Stromstärke einer HGÜ am Ort einer ersten Stromrichterstation und eines Triggersignals der ersten Stromrichterstation im Fall eines Gleichstromfehlers,
FIG 5 Verläufe einer Stromstärke einer HGÜ am Ort einer zweiten Stromrichterstation und eines Triggersignals der zweiten Stromrichterstation im Fall eines Gleichstromfehlers.

Einander entsprechende Teile sind in den Figuren mit denselben Bezugszeichen versehen.

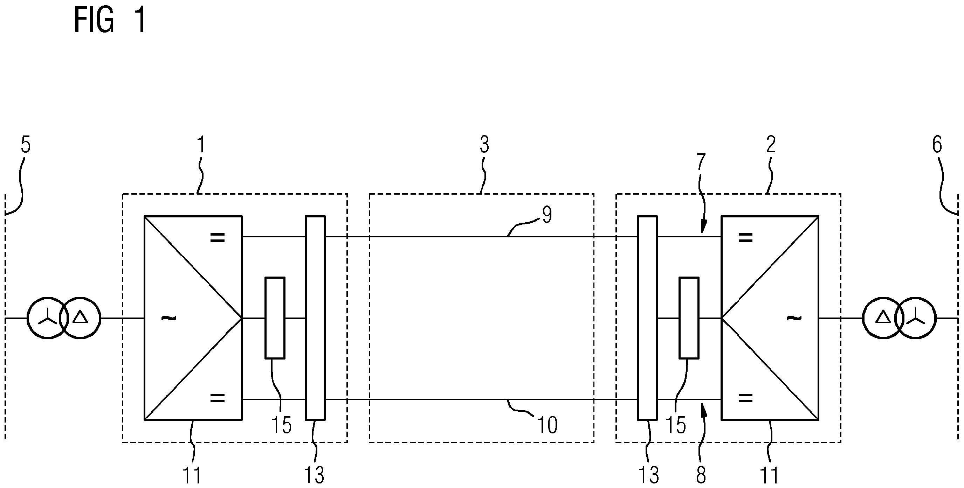

Figur 1 zeigt schematisch zwei Stromrichterstationen 1, 2 einer HGÜ, die gleichstromseitig miteinander über eine HGÜ-Strecke 3 verbunden sind. Eine erste Stromrichterstation 1 ist wechselstromseitig mit einem ersten Wechselstromnetz 5 verbunden. Die zweite Stromrichterstation 2 ist wechselstromseitig mit einem zweiten Wechselstromnetz 6 verbunden.

Die HGÜ ist symmetrisch monopolar mit einem ersten Pol 7 und einem zweiten Pol 8 ausgebildet. Die HGÜ-Strecke 3 weist für den ersten Pol 7 eine erste Übertragungsleitung 9 und für den zweiten Pol 8 eine zweite Übertragungsleitung 10 auf.

Jede Stromrichterstation 1, 2 weist eine Stromrichtereinheit 11, eine Messvorrichtung 13 und eine Steuereinheit 15 auf.

Jede Stromrichtereinheit 11 weist für jeden Pol 7, 8 einen selbstgeführten Stromrichter auf, der in Abhängigkeit von der Energieübertragungsrichtung als ein Gleichrichter zum Umrichten eines Wechselstroms und einer Wechselspannung des jeweiligen Wechselstromnetzes 5, 6 in einen Gleichstrom und eine Gleichspannung der HGÜ oder als ein Wechselrichter zum Umrichten eines Gleichstroms und einer Gleichspannung der HGÜ in einen Wechselstrom und eine Wechselspannung des jeweiligen Wechselstromnetzes 5, 6 einsetzbar ist und beispielsweise als ein modularer Multilevel-Stromrichter ausgebildet ist.

Die Messvorrichtung 13 jeder Stromrichterstation 1, 2 ist dazu ausgebildet, für einen ersten Pol 7 der HGÜ eine erste Stromstärke I₁ und eine erste Stromstärkenänderung İ₁ der ersten Stromstärke I₁ und für den zweiten Pol 8 der HGÜ eine zweite Stromstärke I₂ und eine zweite Stromstärkenänderung İ₂ der zweiten Stromstärke I₂ am Ort der jeweiligen Stromrichterstation 1, 2 zu erfassen.

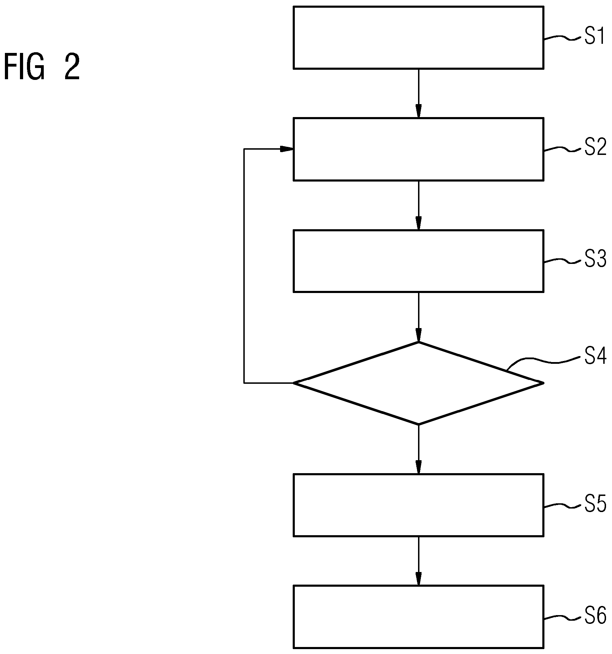

Jede Steuereinheit 15 ist dazu ausgebildet, die Verfahrensschritte S3 bis S6 des anhand der Figur 2 beschriebenen Verfahrens durchzuführen.

Figur 2 zeigt ein Ablaufdiagramm eines Ausführungsbeispiels des erfindungsgemäßen Verfahrens zum Überwachen der HGÜ zwischen den beiden Stromrichterstationen 1, 2 mit Verfahrensschritten S1 bis S6. Das Verfahren wird von jeder Stromrichterstation 1, 2 unabhängig von der anderen Stromrichterstation 1, 2 ausgeführt, das heißt die im Folgenden beschriebenen Verfahrensschritte S1 bis S6 beziehen sich jeweils auf eine Stromrichterstation 1, 2 und deren Stromrichtereinheit 11, Messvorrichtung 13 und Steuereinheit 15.

In einem ersten Verfahrensschritt S1 werden ein Stromstärkeschwellenwert L1 für die Stromstärken I₁, I₂ der Pole 7, 8, zwei verschiedene Intervalllängen T₁, T₂ für Zeitintervalle und für jede vorgegebene Intervalllänge T₁, T₂ ein Änderungsschwellenwert L2, L3 für eine über Zeitintervalle der Intervalllänge T₁, T₂ gemittelte Stromstärkenänderung jeder Stromstärke I₁, I₂ vorgegeben. Beispielsweise liegt eine erste Intervalllänge T₁ zwischen 100 µs und 500 µs und die zweite Intervalllänge T₂ liegt zwischen 500 µs und 2 ms.

In einem zweiten Verfahrensschritt S2 werden von der Messvorrichtung 13 für jeden Pol 7, 8 der HGÜ die Stromstärke I₁, I₂ und die Stromstärkenänderung İ₁, İ₂ der Stromstärke I₁, I₂ erfasst.

In einem dritten Verfahrensschritt S3 wird von der Steuereinheit 15 für jede vorgegebene Intervalllänge T₁, T₂ aus der in dem zweiten Verfahrensschritt S2 von der Messvorrichtung 13 erfassten Stromstärkenänderung İ₁, İ₂ der Stromstärke I₁, I₂ jedes Pols 7, 8 eine über Zeitintervalle der Intervalllänge T₁, T₂ gemittelte Stromstärkenänderung gebildet.

In einem vierten Verfahrensschritt S4 wird von der Steuereinheit 15 für jeden Pol 7, 8 der Betrag der in dem zweiten Verfahrensschritt S2 von der Messvorrichtung 13 erfassten Stromstärke I₁, I₂ mit dem in dem ersten Verfahrensschritt S1 vorgegebenen Stromstärkeschwellenwert L1 verglichen. Ferner wird in dem vierten Verfahrensschritt S4 von der Steuereinheit 15 für jeden Pol 7, 8 und für jede vorgegebene Intervalllänge T₁, T₂ der Betrag der in dem dritten Verfahrensschritt S3 gebildeten gemittelten Stromstärkenänderung mit dem in dem ersten Verfahrensschritt S1 für die Intervalllänge T₁, T₂ vorgegebenen Änderungsschwellenwert L2, L3 verglichen. Wenn der Betrag der Stromstärke I₁, I₂ wenigstens eines Pols 7, 8 größer als der Stromstärkeschwellenwert L1 ist oder für eine Intervalllänge T₁, T₂ der Betrag der gemittelten Stromstärkenänderung der Stromstärke I₁, I₂ wenigstens eines Pols 7, 8 größer als der für die Intervalllänge T₁, T₂ vorgegebene Änderungsschwellenwert L2, L3 ist, wird auf einen Gleichstromfehler geschlossen und das Verfahren wird mit einem fünften Verfahrensschritt S5 fortgesetzt. Andernfalls wird das Verfahren mit dem zweiten Verfahrensschritt S2 fortgesetzt.

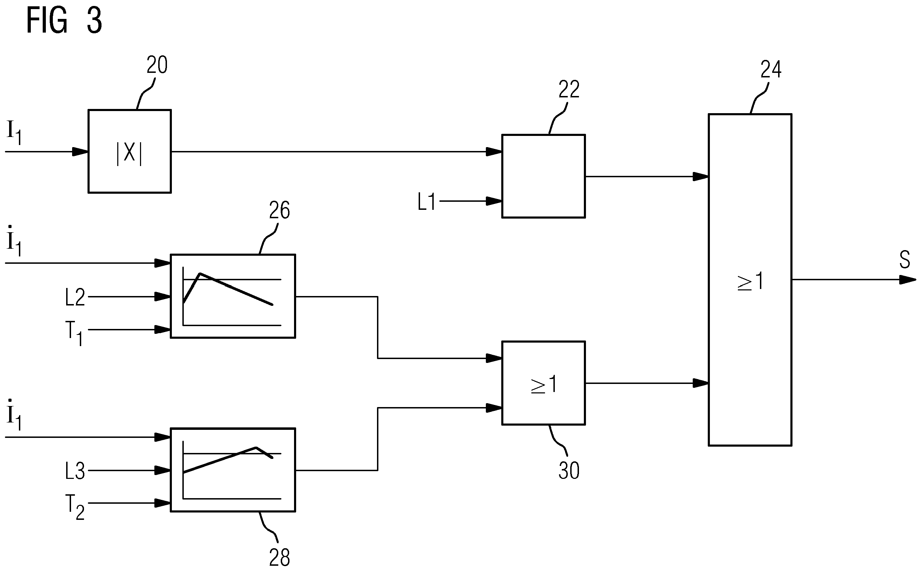

Figur 3 zeigt schematisch ein Blockdiagramm für die Durchführung der Verfahrensschritte S3 und S4 für den ersten Pol 7. Die in dem zweiten Verfahrensschritt S2 erfasste erste Stromstärke I₁ wird einem Betragsbilder 20 zugeführt, der den Betrag der ersten Stromstärke I₁ bildet. Der Betrag der ersten Stromstärke I₁ wird von einem Vergleicher 22 mit dem Stromstärkeschwellenwert L1 verglichen. Wenn der Betrag der ersten Stromstärke I₁ größer als der Stromstärkeschwellenwert L1 ist, gibt der Vergleicher 22 eine Eins als Ausgangssignal an ein erstes Oder-Glied 24 aus, andernfalls gibt der Vergleicher 22 eine Null als Ausgangssignal an das erste Oder-Glied 24 aus.

Die in dem zweiten Verfahrensschritt S2 erfasste erste Stromstärkenänderung İ₁ wird jeweils einem ersten Auswerter 26 und einem zweiten Auswerter 28 zugeführt. Der erste Auswerter 26 mittelt die erste Stromstärkenänderung İ₁ über ein Zeitintervall der ersten Intervalllänge T₁ und vergleicht den Betrag der gemittelten ersten Stromstärkenänderung mit einem ersten Änderungsschwellenwert L2. Wenn der Betrag der gemittelten ersten Stromstärkenänderung größer als der erste Änderungsschwellenwert L2 ist, gibt der erste Auswerter 26 als Ausgangssignal eine Eins an ein zweites Oder-Glied 30 aus, andernfalls gibt der erste Auswerter 26 als Ausgangssignal eine Null an das zweite Oder-Glied 30 aus.

Entsprechend mittelt der zweite Auswerter 28 die erste Stromstärkenänderung İ₁ über ein Zeitintervall der zweiten Intervalllänge T₂ und vergleicht den Betrag der gemittelten ersten Stromstärkenänderung mit dem zweiten Änderungsschwellenwert L3. Wenn der Betrag der gemittelten ersten Stromstärkenänderung größer als der zweite Änderungsschwellenwert L3 ist, gibt der zweite Auswerter 28 als Ausgangssignal eine Eins an das zweite Oder-Glied 30 aus, andernfalls gibt der zweite Auswerter 28 als Ausgangssignal eine Null an das zweite Oder-Glied 30 aus.

Das Ausgangssignal des zweiten Oder-Glieds 30 wird dem ersten Oder-Glied 24 zugeführt. Das erste Oder-Glied 24 gibt daher eine Eins als ein Triggersignal S aus, wenn der Betrag der ersten Stromstärke I₁ größer als der Stromstärkeschwellenwert L1 ist oder der Betrag der über ein Zeitintervall der ersten Intervalllänge T₁ gemittelten ersten Stromstärkenänderung größer als der erste Änderungsschwellenwert L2 ist oder der Betrag der über ein Zeitintervall der zweiten Intervalllänge T₂ gemittelten ersten Stromstärkenänderung größer als der zweite Änderungsschwellenwert L3 ist. Anderfalls gibt das erste Oder-Glied 24 eine Null als Triggersignal S aus.

Der Betragsbilder 20, der Vergleicher 22, die Oder-Glieder 24, 30 und die Auswerter 26, 28 können als Hardwarekomponenten der Steuereinheit 15 oder als Programmschritte einer von der Steuereinheit 15 ausgeführten Software ausgeführt sein.

In dem fünften Verfahrensschritt S5 wird der Strom jedes Pols 7, 8 von der Steuereinheit 15 durch eine Ansteuerung des dem Pol 7, 8 zugeordneten Stromrichters der Stromrichterstation 1, 2 auf Null geregelt. Die Regelung wird ausgelöst, wenn das Triggersignal S der Steuereinheit 15 den Wert Eins annimmt.

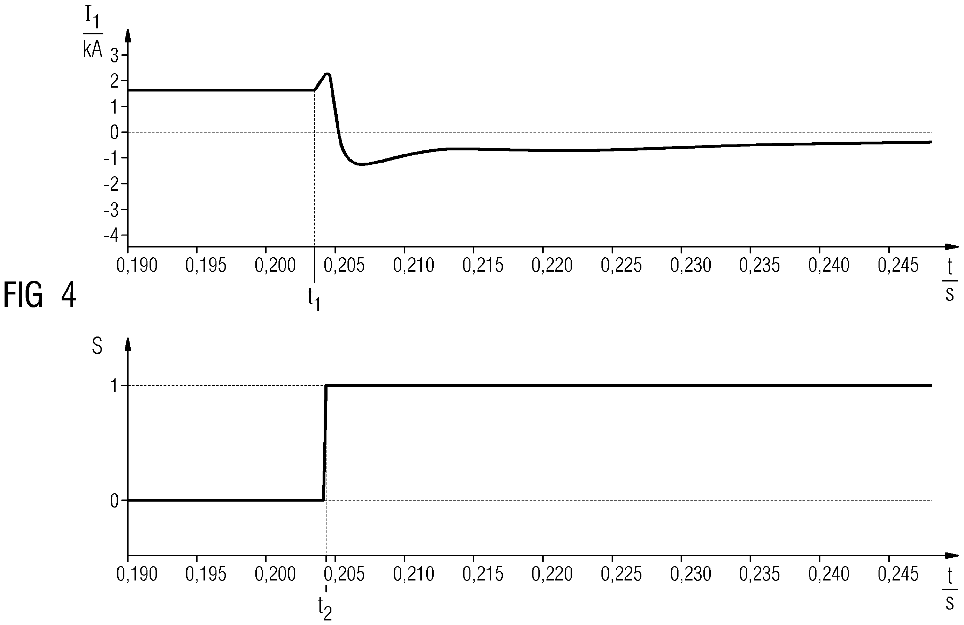

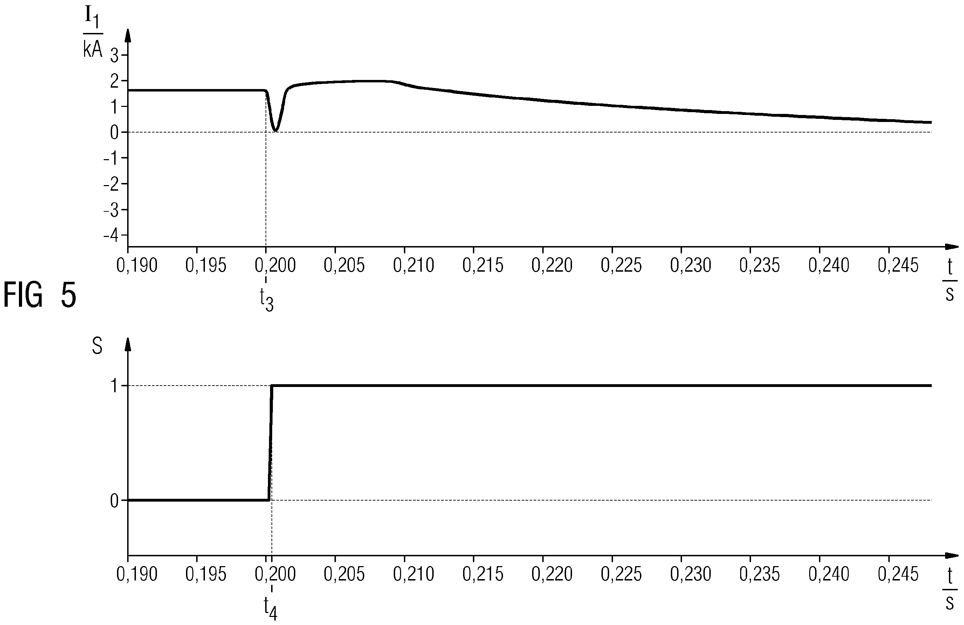

Die Figuren 4 und 5 zeigen beispielhaft Verläufe der ersten Stromstärke I₁ an den Orten der Stromrichterstationen 1, 2 und der Triggersignale S der Stromrichterstationen 1, 2 im Fall eines Erdschlussfehlers des ersten Pols 7. Dabei wurde angenommen, dass die Stromrichter der Stromrichtereinheit 11 der ersten Stromrichterstation 1 als Gleichricher betrieben werden, die Stromrichter der Stromrichtereinheit 11 der zweiten Stromrichterstation 2 als Wechselrichter betrieben werden und der Erdschlussfehler in der Nähe der zweiten Stromrichterstation 2 auftritt.

Figur 4 zeigt den Verlauf der ersten Stromstärke I₁ am Ort der ersten Stromrichterstation 1 und den Verlauf des Triggersignals S der ersten Stromrichterstation 1. Der Erdschlussfehler bewirkt einen Anstieg der ersten Stromstärke I₁ am Ort der ersten Stromrichterstation 1 ab einem ersten Zeitpunkt t₁. Die erste Stromrichterstation 1 erfasst diesen Anstieg und reagiert auf ihn gemäß den Verfahrensschritten S2 bis S5. Die Regelung der ersten Stromstärke I₁ auf Null durch die erste Stromrichterstation 1 gemäß dem fünften Verfahrensschritt S5 setzt zu einem zweiten Zeitpunkt t₂ ein, zu dem das Triggersignal S der ersten Stromrichterstation 1 den Wert Eins annimmt. Zwischen dem ersten Zeitpunkt t₁ und dem zweiten Zeitpunkt t₂ liegt eine Reaktionszeit von z. B. 500 µs. Nach dem zweiten Zeitpunkt t₂ nimmt die erste Stromstärke I₁ durch die Regelung zunächst ab, wobei sie das Vorzeichen wechselt, steigt danach wieder langsam an und nähert sich dem Wert Null.

Figur 5 zeigt den Verlauf der ersten Stromstärke I₁ am Ort der zweiten Stromrichterstation 2 und den Verlauf des Triggersignals S der zweiten Stromrichterstation 2. Der Erdschlussfehler bewirkt am Ort der zweiten Stromrichterstation 2 einen Abfall der ersten Stromstärke I₁ ab einem dritten Zeitpunkt t₃, der vor dem ersten Zeitpunkt t₁ liegt, da der Erdschlussfehler in der Nähe der zweiten Stromrichterstation 2 auftritt und sich daher an deren Ort eher auswirkt als an dem Ort der ersten Stromrichterstation 1. Entsprechend reagiert die zweite Stromrichterstation 2 auf den Erdschlussfehler zu einem vierten Zeitpunkt t₄, der vor dem zweiten Zeitpunkt t₂ und z. B. 500 µs nach dem dritten Zeitpunkt t₃ liegt.

Falls durch den Gleichstromfehler einer der Pole 1, 2 aufgeladen wurde, veranlasst die Steuereinheit 15 in einem sechsten Verfahrensschritt S6 die Entladung des aufgeladenen Pols 1, 2. Beispielsweise wird dazu eine Regelungszeitdauer für die Regelung der Ströme der Pole 7, 8 in dem fünften Verfahrensschritt S5 vorgegeben und der sechste Verfahrensschritt S6 wird nach dem Ablauf der Regelungszeitdauer durchgeführt. Die Regelungszeitdauer liegt beispielsweise zwischen 100 ms und 500 ms.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 2: Stromrichterstation
- 3: HGÜ-Strecke
- 5, 6: Wechselstromnetz
- 7, 8: Pol
- 9, 10: Übertragungsleitung
- 11: Stromrichtereinheit
- 13: Messvorrichtung
- 15: Steuereinheit
- 20: Betragsbilder
- 22: Vergleicher
- 24, 30: Oder-Glied
- 26, 28: Auswerter
- I₁, I₂: Stromstärke
- İ₁, İ₂: Stromstärkenänderung
- L1: Stromstärkeschwellenwert
- L2, L3: Änderungsschwellenwert
- S: Triggersignal
- S1 bis S6: Verfahrensschritt
- t: Zeit
- t₁ bis t₄: Zeitpunkt
- T₁, T₂: Intervalllänge

## Patentansprüche

1. Verfahren zum Überwachen einer HGÜ zwischen zwei Stromrichterstationen (1, 2), wobei
- ein Stromstärkeschwellenwert (L1) für eine Stromstärke (I₁, I₂) der HGÜ vorgegeben wird,
- wenigstens eine Intervalllänge (T₁, T₂) für Zeitintervalle vorgegeben wird und für jede vorgegebene Intervalllänge (T₁, T₂) ein Änderungsschwellenwert (L2, L3) für eine über Zeitintervalle der Intervalllänge (T₁, T₂) gemittelte Stromstärkenänderung der Stromstärke (I₁, I₂) der HGÜ vorgegeben wird,
- für jeden Pol (7, 8) der HGÜ die Stromstärke (I₁, I₂) und für jede vorgegebene Intervalllänge (T₁, T₂) eine über Zeitintervalle der Intervalllänge (T₁, T₂) gemittelte Stromstärkenänderung der Stromstärke (I₁, I₂) ermittelt werden,
- für jeden Pol (7, 8) der HGÜ der Betrag der Stromstärke (I₁, I₂) mit dem vorgegebenen Stromstärkeschwellenwert (L1) verglichen wird und für jede vorgegebene Intervalllänge (T₁, T₂) der Betrag der gemittelten Stromstärkenänderung mit dem für die Intervalllänge (T₁, T₂) vorgegebenen Änderungsschwellenwert (L2, L3) verglichen wird, und
- auf einen Gleichstromfehler geschlossen wird, wenn der Betrag der Stromstärke (I₁, I₂) wenigstens eines Pols (7, 8) größer als der Stromstärkeschwellenwert (L1) ist oder für eine Intervalllänge (T₁, T₂) der Betrag der gemittelten Stromstärkenänderung der Stromstärke (I₁, I₂) wenigstens eines Pols (7, 8) größer als der für die Intervalllänge (T₁, T₂) vorgegebene Änderungsschwellenwert (L2, L3) ist.

2. Verfahren nach Anspruch 1, wobei im Fall eines erkannten Gleichstromfehlers der Strom jedes Pols (7, 8) durch eine Ansteuerung eines dem Pol (7, 8) zugeordneten Stromrichters einer Stromrichterstation (1, 2) auf Null geregelt wird.

3. Verfahren nach Anspruch 2, wobei im Fall einer symmetrisch monopolaren HGÜ nach der Regelung der Ströme der Pole (7, 8) auf Null ein durch den Gleichstromfehler aufgeladener Pol (7, 8) entladen wird.

4. Verfahren nach Anspruch 3, wobei eine Regelungszeitdauer für die Regelung der Ströme der Pole (7, 8) auf Null vorgegeben wird und der durch den Gleichstromfehler aufgeladene Pol (7, 8) nach dem Ablauf der Regelungszeitdauer entladen wird.

5. Verfahren nach Anspruch 4, wobei die Regelungszeitdauer zwischen 100 ms und 500 ms liegt.

6. Verfahren nach einem der vorhergehenden Ansprüche, wobei zwei verschiedene Intervalllängen (T₁, T₂) für Zeitintervalle vorgegeben werden.

7. Verfahren nach Anspruch 6, wobei eine erste Intervalllänge (T₁) zwischen 100 µs und 500 µs liegt und die zweite Intervalllänge (T₂) zwischen 500 µs und 2 ms liegt.

8. Stromrichterstation (1, 2) für eine HGÜ, die Stromrichterstation (1, 2) umfassend
- eine Messvorrichtung (13), die für jeden Pol (7, 8) der HGÜ zum wiederholten Erfassen einer Stromstärke (I₁, I₂) und einer Stromstärkenänderung (İ₁, İ₂) der Stromstärke (I₁, I₂) ausgebildet ist, und
- eine Steuereinheit (15), die dazu ausgebildet ist, für jeden Pol (7, 8) den Betrag der Stromstärke (I₁, I₂) mit einem vorgegebenen Stromstärkeschwellenwert (L1) zu vergleichen und für wenigstens eine vorgegebene Intervalllänge (T₁, T₂) aus der Stromstärkenänderung (İ₁, İ₂) der Stromstärke (I₁, I₂) des Pols (7, 8) eine über Zeitintervalle der Intervalllänge (T₁, T₂) gemittelte Stromstärkenänderung zu bilden und deren Betrag mit einem für die Intervalllänge (T₁, T₂) vorgegebenen Änderungsschwellenwert (L2, L3) zu vergleichen und auf einen Gleichstromfehler zu schließen, wenn der Betrag der Stromstärke (I₁, I₂) wenigstens eines Pols (7, 8) größer als der Stromstärkeschwellenwert (L1) ist oder für eine Intervalllänge (T₁, T₂) der Betrag der gemittelten Stromstärkenänderung der Stromstärke (I₁, I₂) wenigstens eines Pols (7, 8) größer als der für die Intervalllänge (T₁, T₂) vorgegebene Änderungsschwellenwert (L2, L3) ist.

9. Stromrichterstation (1, 2) nach Anspruch 8, wobei jeder Stromrichter der Stromrichterstation (1, 2) zum Aufbauen einer Gegenspannung ausgebildet ist, die einer Aufladung eines Pols, dem der Stromrichter zugeordnet ist, entgegenwirkt.

10. Stromrichterstation (1, 2) nach Anspruch 9, wobei die Steuereinheit (15) dazu ausgebildet ist, im Fall eines erkannten Gleichstromfehlers den Strom jedes Pols (7, 8) durch eine Ansteuerung eines dem Pol (7, 8) zugordneten Stromrichters der Stromrichterstation (1, 2) auf Null zu regeln.

11. Stromrichterstation (1, 2) nach Anspruch 10, wobei im Fall einer symmetrisch monopolaren HGÜ die Steuereinheit (15) dazu ausgebildet ist, nach der Regelung der Ströme der Pole (7, 8) auf Null eine Entladung eines durch den Gleichstromfehler aufgeladenen Pols (7, 8) zu veranlassen.

12. Stromrichterstation (1, 2) nach Anspruch 11, wobei die Steuereinheit (15) dazu ausgebildet ist, die Ströme der Pole (7, 8) während einer vorgegebenen Regelungszeitdauer auf Null zu regeln und die Entladung des durch den Gleichstromfehler aufgeladenen Pols (7, 8) nach dem Ablauf der Regelungszeitdauer zu veranlassen.

13. Stromrichterstation (1, 2) nach einem der Ansprüche 8 bis 12, wobei jeder Stromrichter der Stromrichterstation (1, 2) als ein selbstgeführter Stromrichter ausgebildet ist.

14. Stromrichterstation (1, 2) nach einem der Ansprüche 8 bis 13, wobei jeder Stromrichter der Stromrichterstation (1, 2) als ein modularer Multilevel-Stromrichter ausgebildet ist.

## Claims

1. Method for monitoring an HVDC transmission between two power converter stations (1, 2), wherein
- a current intensity threshold value (L1) for a current intensity (I₁, I₂) of the HVDC transmission is preset,
- at least one interval length (T₁, T₂) for time intervals is preset, and for each preset interval length (T₁, T₂), a change threshold value (L2, L3) for a current intensity change in the current intensity (I₁, I₂) of the HVDC transmission, averaged over time intervals of the interval length (T₁, T₂), is preset,
- for each pole (7, 8) of the HVDC transmission, the current intensity (I₁, I₂), and for each preset interval length (T₁, T₂), a current intensity change in the current intensity (I₁, I₂), averaged over time intervals of the interval length (T₁, T₂), are determined,
- for each pole (7, 8) of the HVDC transmission, the absolute value of the current intensity (I₁, I₂) is compared with the preset current intensity threshold value (L1), and for each preset interval length (T₁, T₂), the absolute value of the averaged current intensity change is compared with the change threshold value (L2, L3) preset for the interval length (T₁, T₂), and
- it is concluded that there is a DC fault when the absolute value of the current intensity (I₁, I₂) of at least one pole (7, 8) is greater than the current intensity threshold value (L1) or, for an interval length (T₁, T₂), the absolute value of the averaged current intensity change in the current intensity (I₁, I₂) of at least one pole (7, 8) is greater than the change threshold value (L2, L3) preset for the interval length (T₁, T₂).

2. Method according to Claim 1, wherein, in the event of an identified DC fault, the current of each pole (7, 8) is regulated to zero by activation of a power converter, assigned to the pole (7, 8), of a power converter station (1, 2).

3. Method according to Claim 2, wherein, in the case of a symmetrically monopolar HVDC transmission, after the regulation of the currents of the poles (7, 8) to zero, a pole (7, 8) charged by the DC fault is discharged.

4. Method according to Claim 3, wherein a regulation time period for the regulation of the currents of the poles (7, 8) to zero is preset, and the pole (7, 8) charged by the DC fault is discharged once the regulation time period has expired.

5. Method according to Claim 4, wherein the regulation time period is between 100 ms and 500 ms.

6. Method according to one of the preceding claims, wherein two different interval lengths (T₁, T₂) for time intervals are preset.

7. Method according to Claim 6, wherein a first interval length (T₁) is between 100 µs and 500 µs, and the second interval length (T₂) is between 500 µs and 2 ms.

8. Power converter station (1, 2) for an HVDC transmission, the power converter station (1, 2) comprising
- a measuring device (13), which is designed to repeatedly record, for each pole (7, 8) of the HVDC transmission, a current intensity (I₁, I₂) and a current intensity change (İ₁, İ₂) in the current intensity (I₁, I₂), and
- a control unit (15), which is designed to compare, for each pole (7, 8), the absolute value of the current intensity (I₁, I₂) with a preset current intensity threshold value (L1), and to form, for at least one preset interval length (T₁, T₂), a current intensity change averaged over time intervals of the interval length (T₁, T₂) from the current intensity change (İ₁, İ₂) in the current intensity (I₁, I₂) of the pole (7, 8), and to compare the absolute value of said averaged current intensity change with a change threshold value (L2, L3) preset for the interval length (T₁, T₂), and to conclude that there is a DC fault when the absolute value of the current intensity (I₁, I₂) of at least one pole (7, 8) is greater than the current intensity threshold value (L1) or, for an interval length (T₁, T₂), the absolute value of the averaged current intensity change in the current intensity (I₁, I₂) of at least one pole (7, 8) is greater than the change threshold value (L2, L3) preset for the interval length (T₁, T₂).

9. Power converter station (1, 2) according to Claim 8, wherein each power converter of the power converter station (1, 2) is designed to build up a back-EMF, which counteracts charging of a pole to which the power converter is assigned.

10. Power converter station (1, 2) according to Claim 9, wherein the control unit (15) is designed to regulate the current of each pole (7, 8) to zero in the event of an identified DC fault by activation of a power converter, assigned to the pole (7, 8), of the power converter station (1, 2) .

11. Power converter station (1, 2) according to Claim 10, wherein, in the case of a symmetrically monopolar HVDC transmission, the control unit (15) is designed to initiate discharge of a pole (7, 8) charged by the DC fault after the regulation of the currents of the poles (7, 8) to zero.

12. Power converter station (1, 2) according to Claim 11, wherein the control unit (15) is designed to regulate the currents of the poles (7, 8) to zero during a preset regulation time period, and to initiate the discharge of the pole (7, 8) charged by the DC fault once the regulation time period has expired.

13. Power converter station (1, 2) according to one of Claims 8 to 12, wherein each power converter of the power converter station (1, 2) is in the form of a self-commutated power converter.

14. Power converter station (1, 2) according to one of Claims 8 to 13, wherein each power converter of the power converter station (1, 2) is in the form of a modular multilevel power converter.

## Revendications

1. Procédé de contrôle d'un transport d'un courant continu à haute tension entre deux postes (1, 2) de convertisseur, dans lequel
- on prescrit une valeur (L1) de seuil d'intensité (I₁, I₂) du courant du transport du courant continu à haute tension,
- on prescrit au moins une longueur (T₁, T₂) d'intervalle de temps et, pour chaque longueur (T₁, T₂) d'intervalle prescrite, on prescrit une valeur (L2, L3) de seuil d'une variation, en moyenne sur un intervalle de temps de la longueur (T₁, T₂) de l'intervalle, de l'intensité (I₁, I₂) du courant du transport du courant continu en haute tension,
- pour chaque pôle (7, 8) du transport du courant continu en haute tension on détermine les intensités (I₁, I₂) du courant et pour chaque longueur (T₁, T₂) d'intervalle prescrite on détermine une variation, en moyenne sur l'intervalle de temps de la longueur (T₁, T₂) de l'intervalle, de l'intensité (I₁, I₂) du courant,
- pour chaque pôle (7, 8) du transport du courant continu en haute tension on compare le montant de l'intensité (I₁, I₂) du courant à la valeur (L1) de seuil prescrite d'intensité du courant et pour chaque longueur (T₁, T₂) d'intervalle prescrite on compare le montant de la variation en moyenne de l'intensité du courant à la valeur (L2, L3) de seuil de variation prescrite pour les longueurs (T₁, T₂) d'intervalle, et
- on décide d'un défaut du courant continu si le montant de l'intensité (T₁, T₂) d'au moins d'un pôle (7, 8) est plus grand que la valeur (L1) de seuil d'intensité du courant ou si pour une longueur (T₁, T₂) d'intervalle le montant de la variation en moyenne de l'intensité du courant d'au moins un pôle est plus grand que la valeur (L2, L3) de seuil de variation prescrite pour la longueur (T₁, T₂) d'intervalle.

2. Procédé suivant la revendication 1, dans lequel, dans le cas d'une détection d'un défaut du courant continu on règle à zéro le courant de chaque pôle (7, 8) par une commande d'un convertisseur, associé au pôle (7, 8) d'un poste (1, 2) de convertisseur.

3. Procédé suivant la revendication 2, dans lequel, dans le cas d'un transport du courant continu en haute tension monopolaire de manière symétrique on décharge, après le réglage des courants des pôles (7, 8) à zéro, un pôle (7,8) chargé par le défaut du courant continu.

4. Procédé suivant la revendication 3, dans lequel, on prescrit une durée de réglage du courant des pôles (7, 8) à zéro et on décharge le pôle (7, 8) chargé du défaut du courant continu après l'expiration de la durée de réglage.

5. Procédé suivant la revendication 4, dans lequel, la durée de réglage est comprise entre 100 ms et 500 ms.

6. Procédé suivant l'une quelconque des revendications précédentes, dans lequel on prescrit deux longueurs (T₁, T₂) d'intervalle différentes des intervalles de temps.

7. Procédé suivant la revendication 6, dans lequel, une première longueur (T₁) d'intervalle est comprise entre 100 µs et 500 µs et la deuxième longueur (T₂) d'intervalle est comprise entre 500 µs et 2 ms.

8. Poste (1, 2) de convertisseur d'un transport du courant continu en haute tension, le poste (1, 2) de convertisseur du courant comprenant
- un système (13) de mesure, qui est constitué, pour chaque pôle (7, 8) du transport du courant continu en haute tension, détecter de manière répétée une intensité (I₁, I₂) du courant et une variation (İ1, İ2) de l'intensité (I₁, I₂) du courant, et
- une unité (15) de commande, qui est constituée pour comparer, pour chaque pôle (7, 8) le montant de l'intensité (I₁, I₂) du courant à une valeur (L1) de seuil de l'intensité du courant prescrite et pour former, pour au moins une longueur (T₁, T₂) prescrite d'intervalle à partir de la variation (İ1, İ2) de l'intensité (I₁, I₂) du courant du pôle (7, 8), une variation d'intensité de l'intensité du courant en moyenne dans l'intervalle de temps de la longueur (T₁, T₂) de l'intervalle et pour en comparer le montant à une valeur (L2, L3) de seuil de variation prescrite pour les longueurs (T₁, T₂) de l'intervalle et pour décider d'un défaut du courant continu, si le montant de l'intensité (I₁, I₂) du courant d'au moins un pôle (7, 8) est plus que la valeur (L1) de seuil de l'intensité du courant prescrite et/ou si pour une longueur (T₁, T₂) d'intervalle le montant de la variation en moyenne de l'intensité (I₁, I₂) du courant d'au moins un pôle est plus grand que la valeur (L2, L3) de seuil de variation prescrite pour les longueurs (T₁, T₂) d'intervalle.

9. Poste (1, 2) de convertisseur suivant la revendication 8, dans lequel chaque convertisseur du poste (1, 2) de convertisseur est constitué pour la constitution d'une contre-tension, qui s'oppose à une charge d'un pôle associé au convertisseur.

10. Poste (1, 2) de convertisseur suivant la revendication 9, dans lequel l'unité (15) de commande est constituée pour dans le cas de la détection d'un défaut du courant continu régler à zéro le courant de chaque pôle (7, 8) par une commande d'un convertisseur, associé au pôle (7, 8), du poste (1, 2) de convertisseur.

11. Poste (1, 2) de convertisseur suivant la revendication 10, dans lequel, dans le cas d'un transport d'un courant continu en haute tension monopolaire de manière symétrique, l'unité de commande est constituée pour provoquer après le réglage des courants des pôles (7, 8) à zéro une décharge d'un pôle (7, 8) chargé par le défaut du courant continu.

12. Poste (1, 2) de convertisseur suivant la revendication 11, dans lequel l'unité (15) de commande est constituée pour régler à zéro les courants des pôles (7, 8) pendant une durée de réglage prescrite et pour provoquer la décharge du pôle (7, 8) chargé par le défaut du courant continu après l'expiration de la durée de réglage.

13. Poste (1, 2) de convertisseur suivant l'une quelconque des revendications 8 à 12, dans lequel chaque convertisseur du poste (1, 2) de convertisseur est constitué sous la forme d'un convertisseur à commutation autonome.

14. Poste (1, 2) de convertisseur suivant l'une quelconque des revendications 8 à 13, dans lequel chaque convertisseur du poste (1, 2) de convertisseur est constitué sous la forme d'un convertisseur modulaire à plusieurs niveaux.
